# EUROPÄISCHE PATENTSCHRIFT

(11) **EP 0 683 030 B1**
(45) Veröffentlichungstag und Bekanntmachung des Hinweises auf die Patenterteilung: **23.12.1998**
(21) Anmeldenummer: 95106574.7
(22) Anmeldetag: 28.04.1995
(51) Int. Cl.: B29C 51/26, B29C 69/00, B29C 51/30

(54) **Tiefgezogenes Formteil, Tiefziehverfahren und Tiefziehvorrichtung zur Herstellung des Formteils**
Deep-drawn article, deep-drawing process and deep-drawing apparatus for producing said article
Article embouti, procédé d'emboutissage et dispositif d'emboutissage pour la fabrication d'un tel article

(30) Priorität: 16.05.1994 DE 4417102
(43) Veröffentlichungstag der Anmeldung: 22.11.1995
(73) Patentinhaber: Huber, Anton, 83395 Freilassing (DE)
(72) Erfinder: Huber, Anton, 83395 Freilassing (DE)
(74) Vertreter: Patentanwälte Dr. Solf & Zapf

(56) Entgegenhaltungen:
- WO-A-94/26500
- DE-A- 2 017 552

## Beschreibung

Die Erfindung betrifft ein tiefgezogenes Formteil, ein Tiefziehverfahren und eine Tiefziehvorrichtung zur Herstellung des Formteils.

Bei herkömmlichen Tiefziehverfahren zum Herstellen eines Formteils bzw. Formkörpers aus einer Kunststoffolie wird die Folie in ein Formwerkzeug eingebracht, durch eine Heizeinrichtung erwärmt und durch Anlegen eines Vakuums an das entsprechend der auszubildenden Form des Formkörpers konturierte Formwerkzeug angesaugt. Dieses Verfahren ist ein schnelles und einfaches Verfahren zum Herstellen von Kunststofformkörpern in großen Stückzahlen und mit komplizierten Topographien bzw. Konturen.

Derartige im Tiefziehverfahren hergestellte Formteile werden beispielsweise als Instrumententafel, Türverkleidung und anderen Teilen einer PKW-Innenausstattung verwendet, wobei das durch das Tiefziehverfahren ausgebildete dünnwandige Formteil zu einem voluminöseren Körper ausgeschäumt oder auf eine harte Unterlage mit und ohne Schaum dazwischen aufgebracht werden kann. Das aus einer Folie tiefgezogene Formteil dient dann als vorgeformtes, eine vorbestimmte Topographie aufweisendes Dekorelement. Somit wird ein insgesamt sehr leichter, dennoch formstabiler Gegenstand mit bestimmter Eigenfestigkeit erhalten, der eine sehr komplizierte Topographie bzw. Raumform z. B. mit erhabenen und vertieften Oberflächenbereichen aufweisen kann.

Wird zum Tiefziehen eine aus mehreren Folienteilen gefügte vorgefertigte, einstückige Folie 1 verwendet, muß beim Einbringen in das Formwerkzeug große Sorgfalt aufgewandt werden, damit die zwischen den Folienteilen 1a verlaufenden Fügenähte 1b nicht durch den Tiefziehvorgang allzusehr verzogen bzw. versetzt werden und im tiefgezogenen Formteil neben dem gewünschten Linienverlauf liegen. Die mehrteilige Folie wird in der Regel von Hand eingelegt und ausgerichtet. Der Verlauf der Fügenähte wird durch das Erwärmen der Folie und das Anlegen des Vakuums unkontrollierbar verändert. Dieses Verziehen der Folie bewirkt, daß die Fügenähte zwischen den Folienteilen einer Folie im fertigen Produkt in der Regel nicht exakt den gewünschten Verlauf aufweisen. Dies ist insbesondere bei der Fertigung eines Formteils aus einer Folie mit sich äußerlich unterscheidenden Folienteilen, wie z. B. aus Folienteilen mit unterschiedlichen Farben oder unterschiedlicher Oberflächenstruktur, von Nachteil, da der Verlauf der Fügenähte am fertigen Formkörper deutlich zu sehen ist und verzogene Linien störend wirken, wie z. B. bei Produkten der Innenauskleidung von Automobilen, bei denen besonderer Wert auf die ästhetische Wirkung gelegt wird.

Deshalb wurde herkömmlicherweise ein tiefgezogenes Formteil aus einer mehrteiligen Folie in zwei Arbeitsschritten hergestellt, nämlich dem Tiefziehen der einzelnen Folienteile und dem anschließenden Fügen der tiefgezogenen Folienteile. Die Folienteile wurden hierbei mit einer stumpfen oder überlappenden Fügenaht gefügt.

Ein weiterer Nachteil bei den bekannten Formteilen ist, daß sich die Fügenähte beim Tiefziehen, bei dem Zugkräfte auf die Nähte einwirken können, insbesondere bei stumpfer Verbindung der Folienteile stellenweise öffnen oder bei überlappten Nähten teilweise aufgezogen und somit ungleichmäßig und geschwächt werden, was die ästhetische Wirkung mindern und zu minderwertiger Ware oder zu Ausschußware führen kann.

Ferner ist es aus der WO-A-94/26500 bekannt, Folienteile mittels einer gebördelten Fügenaht miteinander zu verbinden gemäβ dem einleitenden Teil der Ansprüche 1 und 8

Dabei wird eine aus wenigstens zwei Folienteilen mit einer dazwischen verlaufenden vorläufigen Fügenaht vorgefertigte Folie im Bereich der vorläufigen Fügenaht zu einer schlauchförmigen Falte tiefgezogen, wobei die Falte zwei sich gegenüberliegende Faltenwände und einen Faltenboden aufweist. Die beiden Faltenwände werden anschließend jeweils an sich gegenüberliegenden Fügebereichen auf Fügetemperatur erhitzt und zu einer gebördelten Fügenaht zusammengedrückt.

Es hat sich gezeigt, daß diese Fügenaht keine ausreichend feste Verbindung schafft.

Aufgabe der Erfindung ist, ein tiefgezogenes, insbesondere aus mehreren Folienteilen zusammengesetztes Formteil zu schaffen, bei dem die Fügenähte eine definierte, sehr hohe Haltekraft aufweisen sowie insbesondere genau wie vorgesehen verlaufen und sehr gleichmäßig ausgebildet sind. Aufgabe der Erfindunq ist ferner ein einfach durchführbares Verfahren und eine einfach aufgebaute Vorrichtung zu schaffen, mit der das neue Formteil einfach herstellbar ist.

Die Aufgabe bezüglich des Formteils wird durch die Merkmale des Anspruchs 1, bezüglich des Verfahrens durch die Merkmale des Anspruchs 8 und bezüglich der Vorrichtung durch die Merkmale des Anspruchs 12 gelöst. Vorteilhafte Weiterbildungen der Erfindung werden in den jeweiligen Unteransprüchen gekennzeichnet. Anhand der Zeichnung wird die Erfindung im folgenden beispielhaft näher erläutert. Es zeigen:
- Fig. 1a: eine Draufsicht auf eine aus mehreren Folienteilen gefügte Folie;
- Fig. 1b: schematisch verschiedene Verbindungsarten an der Fügenaht zwischen den einzelnen in Fig. 1 dargestellten Folienteilen;
- Fig. 2a-2e: jeweils einen Querschnitt durch den Fügewerkzeugbereich eines ersten Ausführungsbeispiels der erfindungsgemäßen Tiefziehvorrichtung in verschiedenen Werkzeugstellungen;
- Fig. 3a-3e: jeweils einen Querschnitt durch den Fügewerkzeugbereich eines erweiterten Ausführungsbeispiels einer erfindungsgemäßen Tiefziehvorrichtung in verschiedenen Werkzeugstellungen;
- Fig. 4a: einen vertikalen Querschnitt durch den Fügewerkzeugbereich einer Tiefziehvorrichtung mit konturierten Stempelleisten;
- Fig. 4b: einen horizontalen Querschnitt durch den Fügewerkzeugbereich der in Fig. 4a dargestellten Tiefziehvorrichtung;
- Fig. 4c: einen vertikalen Querschnitt durch den Fügewerkzeugbereich der in Fig. 4a dargestellten Tiefziehvorrichtung, wobei ein tiefgezogenes Formteil mit einer gebördelten Fügenaht im Fügebereich angeordnet ist;
- Fig. 4d: einen horizontalen Querschnitt durch die Fügenaht des in Fig. 4c dargestellten Formteils; und
- Fig. 5: einen vertikalen Querschnitt durch den Fügewerkzeugbereich einer Tiefziehvorrichtung mit konturierten Stempelleisten und Dichtleisten.

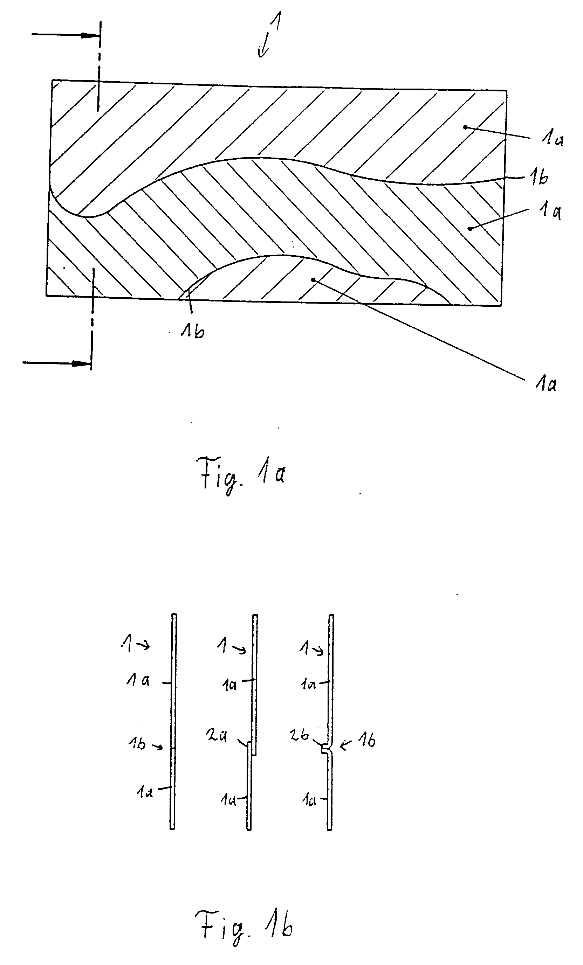

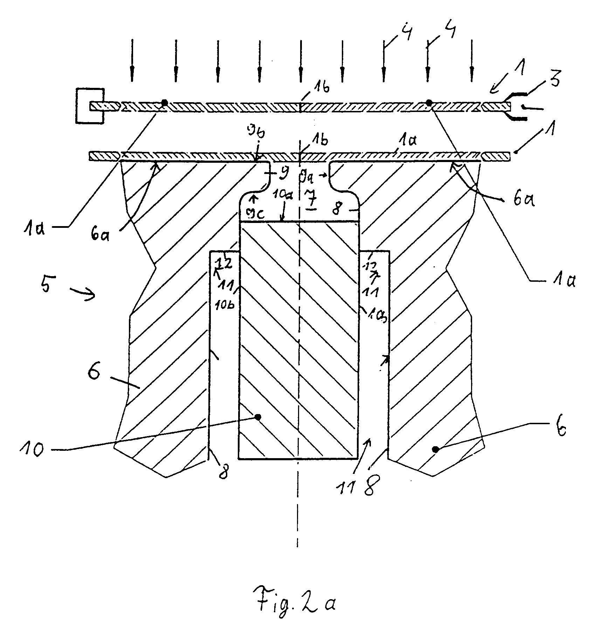

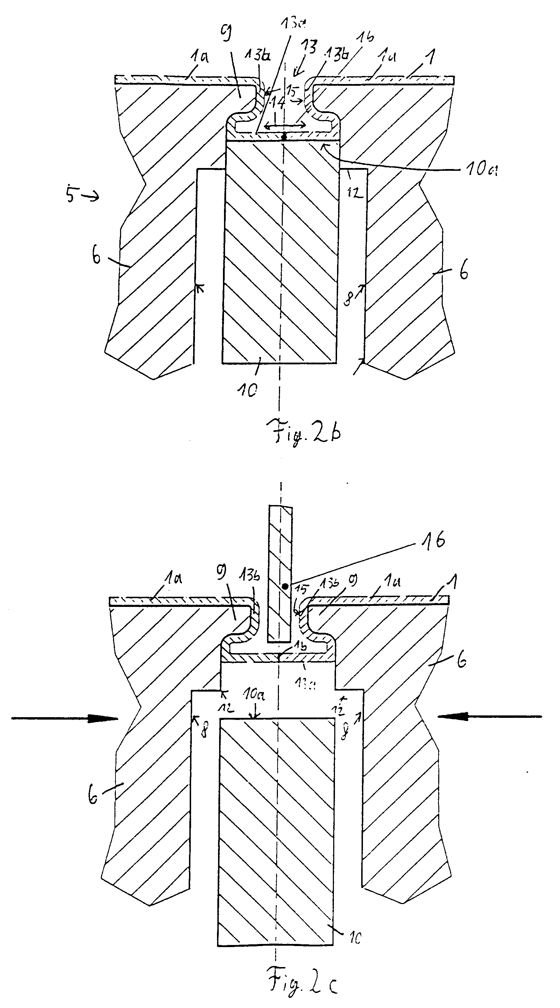

Ein erfindungsgemäßes Formteil wird im Tiefziehverfahren vorzugsweise aus einem aus mehreren Folienteilen 1a gefügten Folienstück 1 hergestellt (Fig. 1a). Die Folienteile 1a sind jeweils an einer vorläufigen Fügenaht 1b miteinander verbunden. Die zwischen den Folienteilen 1a verlaufende vorläufige Fügenaht 1b kann stumpf, überlappend oder gebördelt ausgebildet sein (Fig. 1b). Die überlappende Fügenaht 1b bildet eine Stufe 2a und die gebördelte Fügenaht einen Fügesteg 2b. Die Folienteile 1a können durch Kleben, Schweißen oder eine sonstige übliche Fügeverbindung miteinander verbunden sein.

Ein erstes Ausführungsbeispiel der Tiefziehvorrichtung ist in den Figuren 2a bis 2e dargestellt.

Diese Tiefziehvorrichtung weist ein Formwerkzeug 5 und eine nicht dargestellte Heizeinrichtung zur Erwärmung der aus mehreren Folienteilen 1a gefügten Folie 1 auf (Fig. 2a). Die durch die Heizeinrichtung abgegebene Wärmeenergie ist schematisch durch Pfeile 4 dargestellt, die auf die Folie 1 zeigen und von der z. B. oberhalb des Formwerkzeugs 5 angeordneten Heizeinrichtung abgegeben wird. Die Folie 1 wird durch diese Heizeinrichtung auf ihrer gesamten Fläche auf eine bestimmte Formtemperatur erwärmt, so daß sie für den Tiefziehvorgang gut verformbar ist. Eine zusätzliche oder alternative Heizeinrichtung kann auch im Formwerkzeug 5 z. B. integriert vorgesehen sein und die Folie 1 durch das Formwerkzeug 5 hindurch auf Formtemperatur erhitzen.

Das Formwerkzeug 5 besteht aus zwei seitlich benachbarten Konturteilen 6, die eine entsprechend der Form des auszubildenden Formteils konturierte Oberfläche, die Konturfläche 6a, aufweisen, auf die die Folie 1 zum Tiefziehen aufgebracht wird. Die Konturteile 6 begrenzen zwischen sich eine Nut bzw. einen Spalt 7. Die Konturteile 6 sind nur im Bereich des Spaltes 7 dargestellt (Fig. 2a bis 2e), da sie im übrigen Bereich eine Raumform aufweisen, die für die Erfindung unwesentlich ist. Die Konturteile 6 begrenzen mit jeweils einer vertikalen Seiten- bzw. Spaltwandung 8 seitlich den Spalt 7, wobei die beiden Spaltwandungen 8 zueinander parallel verlaufend angeordnet sind. An beiden Spaltwandungen 8 ist jeweils eine vorkragende, als Preßleiste bzw. Preßstempel dienende Stempelleiste 9 ausgebildet. Die beiden Stempelleisten 9 haben stirnseitig jeweils eine vertikal ausgerichtete Stempelfläche bzw. Preßfläche 9a, wobei diese Flächen einander gegenüberliegend angeordnet sind, eine z. B. horizontale untere Seitenflanke 9c und eine obere z.B. horizontale Seitenflanke 9b, wobei die obere Seitenflanke 9b in die jeweilige Konturfläche 6a übergeht oder Teil der Konturfläche 6a ist.

Der Spaltboden wird durch eine zwischen den beiden Konturteilen 6 angeordnete im Querschnitt rechteckige Fülleiste 10 gebildet, so daß sich eine nach oben offene Nut ergibt, wobei die nutseitige Oberfläche der Fülleiste 10 den Nutboden 10a bildet. Die Fülleiste 10 ist eine langgestreckte Leiste mit rechteckigem Querschnitt, der entsprechend dem Verlauf des Spaltes 7 geformt ist. Die Fülleiste 10 kann in vertikaler Richtung auf- und abbewegt werden, wobei sie in ihrer oberen Stellung (Fig. 2a) mit ihrer Nutbodenfläche 10a einen geringen Abstand zu den unteren Seitenflanken 9c der Stempelleisten 9 aufweist, der etwa der Breite der Stempelfläche 9a der Stempelleiste 9 entspricht. In der oberen Stellung liegt die Fülleiste 10 mit ihren oberen Bereichen ihrer vertikalen Seitenflächen 10b an den vertikalen Spaltwandungen 8 der Konturteile 6 im Abstand unterhalb der Stempelleiste 9 an, so daß die Fülleiste 10 ein Zusammenschieben der Konturteile 6 behindert.

Die Fülleiste 10 kann nach unten verschoben werden, bis sie in den Bereich eines rechtwinklig hinterschnittenen Raums 11 gelangt. Der hinterschnittene Raum 11 wird jeweils von der Spaltwandung 8 durch eine Stufe 12 abgesetzt, die so tief ist, daß die Fülleiste 10 beim Zusammenschieben der Konturteile 6 zum Zwecke des Fügens die Bewegung der Konturteile 6 nicht mehr behindert.

Das Tiefziehverfahren wird nachfolgend anhand des ersten Ausführungsbeispieles der Tiefziehvorrichtung (Fig. 2a bis 2e) erläutert.

Die Folie 1 wird derart in das geöffnete Formwerkzeug 5 durch Auflegen auf die Konturoberflächen 6a der Konturteile 6 eingebracht, daß die vorläufige Fügenaht 1b der Folienteile 1a über dem Spalt 7 verläuft. Das Einbringen der Folie kann von Hand geschehen oder auch automatisch z.B. mit F-iilfe eines nicht dargestellten Rahmens, einer Nadelkette, einer Zange 3 oder einer Kluppenkette.

Nach dem Übergeben der Folien 1 wird durch eine nicht dargestellte Pumpe ein Unterdruck bzw. ein Vakuum derart angelegt, daß die Folie 1 auf die Konturoberflächen 6a der Konturteile 6 und in den Spalt 7 gezogen wird, wobei der Spalt 7 durch die Fülleiste 10 nach unten hin zu einer Nut abgeschlossen ist, und sich die Folie an die Nutwandungen und den Nutboden anschmiegt (Fig. 2b). Durch das Tiefziehen bildet sich somit im Fügenahtbereich aus der Folie 1 in der Nut eine im Querschnitt T-förmige Falte 13 mit einem auf dem Nutboden 10a liegenden Faltenboden 13a und zwei seitlich an die Spaltwandungen 9a, 8 anliegenden Faltenwände 13b.

Die vorläufige Fügenaht 1b zwischen den beiden Folienteilen 1a kann irgendwo im Bereich der Falte 13 verlaufen; im allgemeinen ist die vorläufige Fügenaht 1b am Faltenboden 13a angeordnet, wo sie jedoch nicht quermittig angeordnet sein muß, wie in Fig. 2a durch den Doppelpfeil 14 angedeutet ist, da sich die die Falte 13 bildenden Folienbereiche, nämlich die Randbereiche der Folienteile 1a, beim Tiefziehen in den Spalt 7 ungleichmäßig ausdehnen.

Nachdem die Falte 13 in den Spalt 7 tiefgezogen ist, wird das Vakuum abgeschaltet und dann die Fülleiste 10 nach unten in den hinterschnittenen Bereich der Spaltwände 8 bewegt, so daß die Blockierung der Konturteile 6 aufgehoben ist (Fig. 2c).

Danach wird die Folie 1 an den Faltenwänden 13b, insbesondere an den Bereichen, die auf den Stempelflächen 9a aufliegen bzw. an den Fügeflächen 15 der Folie 1 thermisch aktiviert, indem auf Fügetemperatur erhitzt wird.

Auf einfache Art und Weise kann die Folie 1 mit einem Heißluftgebläse auf die Fügetemperatur erhitzt werden. Statt eines Heißluftgebläses kann auch eine Hochfrequenz- oder Ultraschallquelle verwendet werden. Es kann auch zweckmäßig sein, ein an sich bekanntes Heizschwert 16, dessen Längserstreckung raumformmäßig der Längserstreckung der Falte bzw. Nut 13 angepaßt ist, in die Falte 13 zu senken, wobei auf die Fügeflächen 15 der Folie 1 Wärme vom erhitzten Heizschwert übertragen wird und die Fügeflächen 15 durch das Erhitzen auf Fügetemperatur plastifiziert werden.

Die einzelnen unterschiedlichen Heizeinrichtungen können auch miteinander kombiniert zum thermischen Aktivieren der Fügeflächen 15 der Folie 1 angewandt werden.

Die durch thermisches Aktivieren adhäsiven Fügeflächen 15 der Folie 1 auf der Stempelfläche 9a werden durch Verengen des Spaltes 7 miteinander verpreßt, so daß eine zweite neue Fügenaht 17 zwischen den Folienteilen 1a gebildet wird (Fig. 2d).

Der Spalt 7 wird durch Zusammenschieben der beiden Konturteile 6 verengt, wobei die beiden Konturteile 6 so weit zusammengeschoben werden, daß die Stempelleisten 9 die an ihnen anliegenden Fügebereiche der Folie 1 zusammendrücken und zu der zweiten neuen, endgültigen Fügenaht 17 verbinden. Die neue Fügenaht 17 weist einen in das Formwerkzeug 5 hineinragenden gebördelten Fügesteg 17a auf, wobei die beiden Folienteile 1a im Bereich der Naht 17 oberflächlich fluchtend ausgebildet sind.

Die Fülleiste 10 wird vor dem Zusammenfahren der Konturteile 6 so weit nach unten gefahren, daß ein Raum geschaffen wird, in den das Faltenbodenmaterial beim Zusammenfahren der Konturteile 6 nach unten frei ausbeulen kann (Fig. 2d) . Dadurch wird verhindert, daß das Faltenmaterial die Bildung der zweiten Fügenaht behindert.

Beim Fügen wird die Falte 13 im Bereich der Fügebereiche geschlossen, so daß sich ein an der neuen Fügenaht 17 hängender Schlauch 18 bildet.

Anschließend werden die Konturteile 6 zweckmäßigerweise so weit auseinander gefahren, daß der Schlauch 18 frei durch den Spalt 7 gezogen werden kann (Fig. 2e). Der Folienschlauch 18 kann manuell oder mit einer automatisch arbeitenden Schneideinrichtung abgeschnitten werden. Für bestimmte Verwendungen kann es jedoch vorteilhaft sein, den Folienschlauch 18 nicht zu entfernen, sondern das Formteil auf der Seite des Folienschlauchs 18 zu hinterschäumen, wobei der Folienschlauch 18, der an der Fügenaht 17 hängt, in den Schaum eingebettet wird und eine Verankerung im Schaum bewirkt, wodurch die Festigkeit bzw. Steifigkeit des hinterschäumten Verbundkörpers erhöht wird.

Mit dem Verfahren kann ein Formteil aus einer aus mehreren Folienteilen 1a mit dazwischen verlaufenden, vorläufigen Fügenähten 1b bestehenden Folie 1 im Tiefziehverfahren schnell und einfach hergestellt werden, wobei durch die neu im Hauptfügeverfahren gebildete Fügenaht 17 eine Naht zwischen den Folienteilen 1a erzeugt wird, deren Verlauf präzise durch den Verlauf der einander gegenüberliegend angeordneten mit parallel verlaufenden Stempelflächen 9a versehen Stempelleisten 9 eindeutig festgelegt ist. Beim Einbringen der Folie muß die in einem Vorfügeverfahren gebildete vorläufige Fügenaht 1b nicht exakt positioniert werden, sondern sie muß sich nur im Bereich über dem relativ breiten Spalt 7 befinden. Dies ist auch mit einfachen Mitteln zu bewerkstelligen.

Zudem werden keine besonderen Anforderungen an einen präzisen Verlauf der in einem Vorfügeverfahren gebildeten Fügenaht 1b zwischen den Folienteilen 1a gestellt, die somit nur z. B. "provisorisch" zusammengefügt oder zusammengeheftet oder zusammengenäht werden können, denn die "provisorische" Fügenaht 1b muß die Formteile 1a nur für das oben beschriebene Hauptfügeverfahren zur Bildung der endgültigen Fügenaht 17 zusammenhalten. Es werden weder Ansprüche an deren Zusammenhaltekraft noch an ästhetisches Aussehen gefordert. Die Formteile 1a können somit an der vorläufigen Fügenaht 1b in einem schnellen und kostengünstigen Vorfügeverfahren miteinander verbunden werden.

Die mit dem Tiefziehverfahren hergestellten Formteile weisen diee endgültige Fügenaht 17 mit einem präzisen, durch die Längserstreckung der Stempelleisten 9 vorgegebenen Verlauf auf, wobei die Folienteile 1a in der Fügenaht 17 vorzugsweise miteinander vernetzt oder verschweißt sind. Diese Fügenähte 17 sollen eine sehr gleichmäßige, feste Verbindung, die eine definierte Haltekraft aufweist, bilden.

Am fertigen Produkt bzw. Formteil ist der präzise Verlauf der Fügenaht 17, wie der durch die Topographie des Formteils vorgegeben ist, ohne weiteres erkennbar.

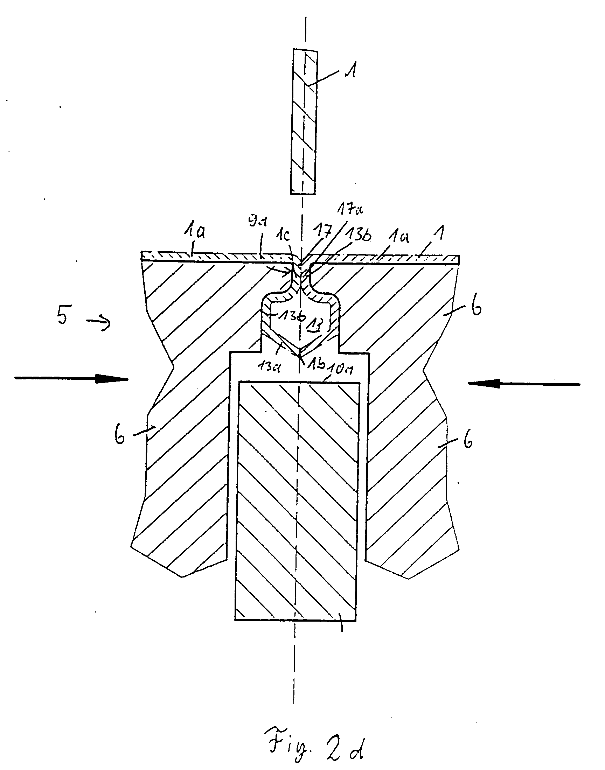

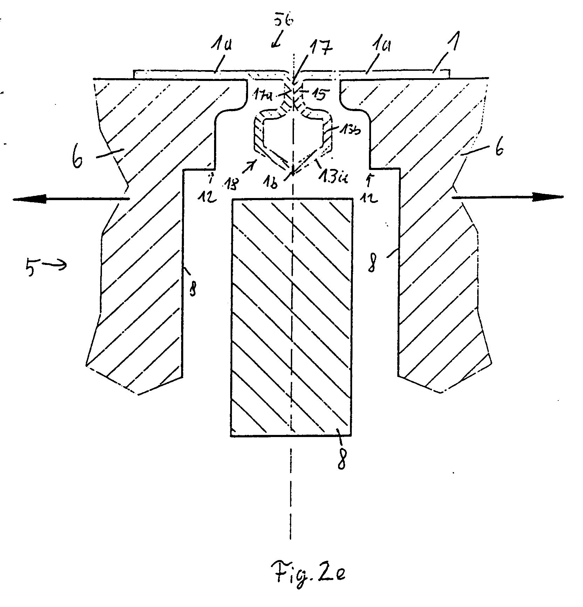

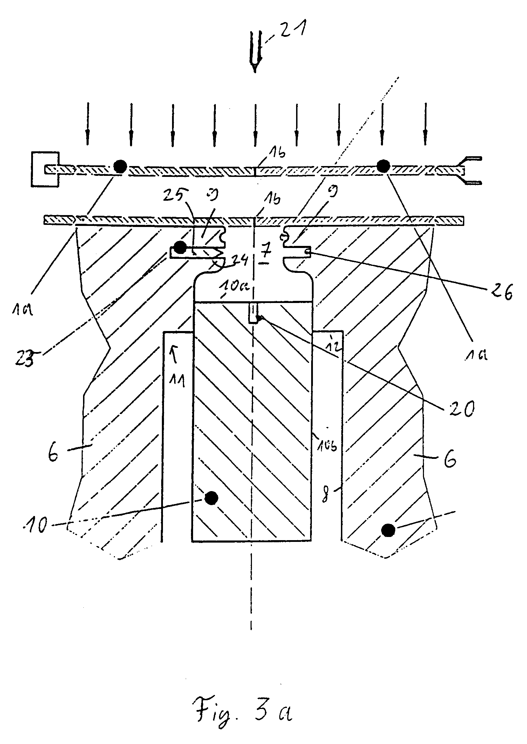

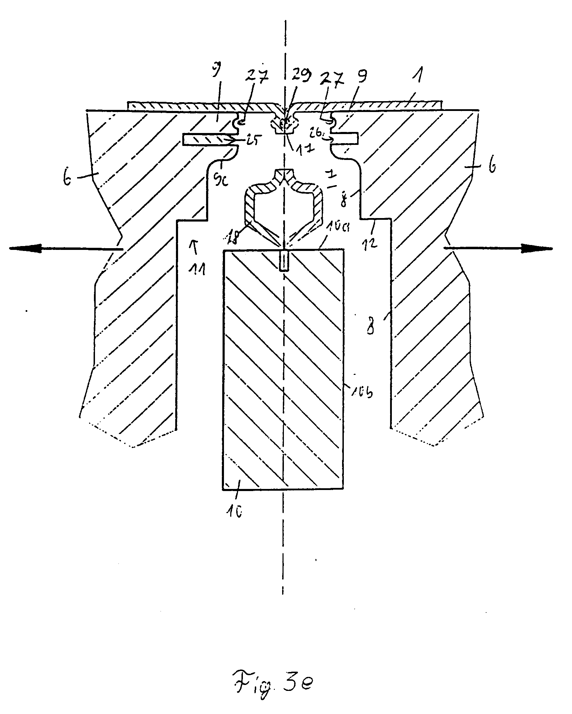

Eine erweiterte Ausführungsform einer erfindungsgemäßen Tiefziehvorrichtung ist in Fig. 3a bis 3e dargestellt. Diese zweite Ausführungsform weist grundsätzlich den gleichen Aufbau wie die erste Ausführungsform gemäß Fig. 2a bis 2e auf. Demgemäß sind gleiche Bauteile mit gleichen Bezugszeichen in den Fig. 3a bis 3e versehen.

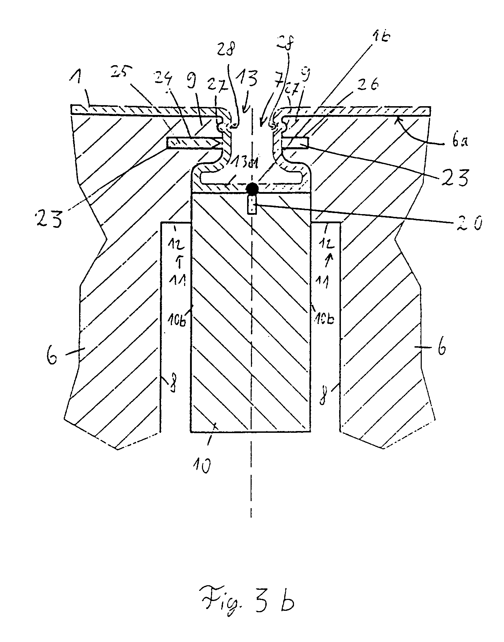

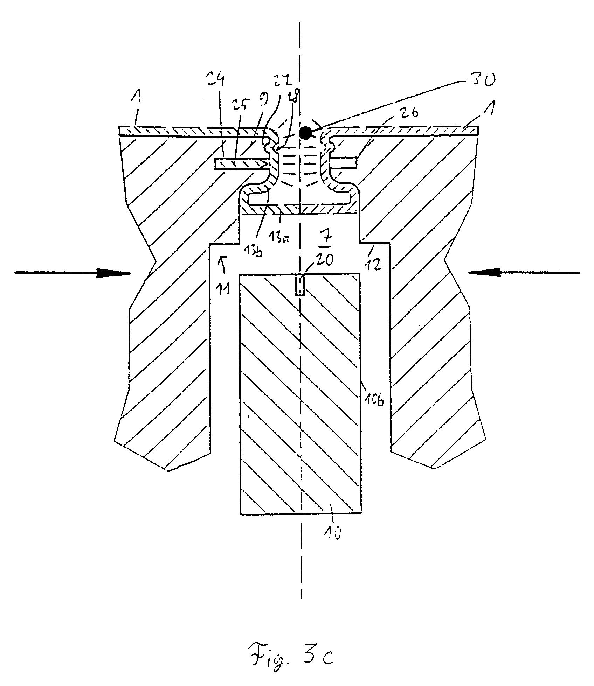

In die Fülleiste 10 ist eine von ihrer nutseitigen Oberfläche 10a ausgehende, in Längsrichtung verlaufende, sich senkrecht zur Oberfläche 10a erstreckende Schneidnut 20 z. B. quermittig eingebracht. Dieser vertikal ausgerichteten Schneidnut 20 ist ein entsprechend vertikal ausgerichtetes Trennmesser 21 oberhalb gegenüberliegend in der Tiefziehvorrichtung außerhalb des Spalts 7 angeordnet (Fig. 3a), wobei das Trennmesser 21 von einer Stellung oberhalb des Spaltes 7 in den Spalt 7 bzw. in die Schneidnut 20 verfahrbar angeordnet ist. Mit dem Trennmesser 21 kann eine in den Spalt 7 gezogene Falte 13 der Folie 1 in Längsrichtun durchtrennt werden, wobei der Faltenboden 13a durchschnitten wird (Fig. 3b).

Beim Verengen des Spaltes 7 durch Zusammenschieben der beiden Konturteile 6 wird der durchtrennte Faltenboden 13a nicht ausgebeult; die beiden Hälften des Faltenbodens 13a können beim Verengen des Spaltes 7 durchhängen bzw. herabhängen oder werden bei steiferem Folienmaterial nach unten gezwängt, so daß verhindert wird, daß Folienmaterial in Richtung Fügebereich verdrängt wird.

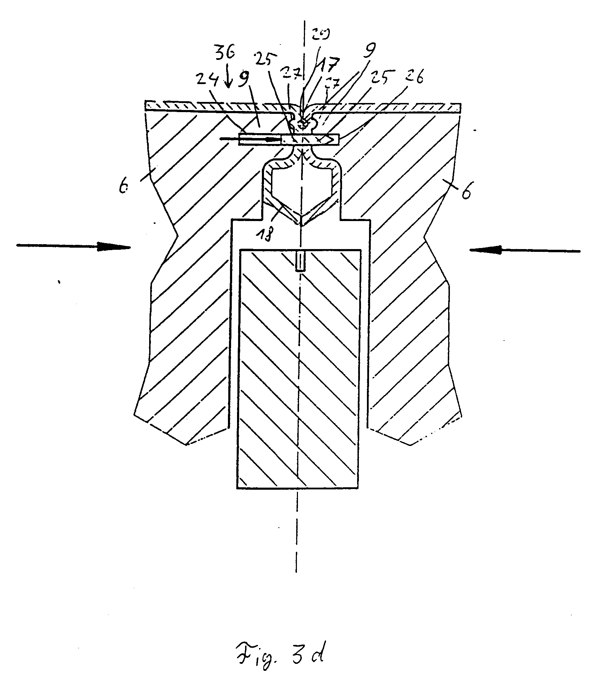

Eine andere Schneideinrichtung 23, die alternativ oder auch zusätzlich zur Schneideinrichtung 20, 21 vorgesehen sein kann, ist an den beiden sich gegenüberliegenden Stempelleisten 9 angeordnet. Sie weist ein in eine senkrecht zur Stempelfläche 9a ausgerichteten Lagernut bzw. Schneidmessernut 24 angeordnetes bandförmiges, dem Verlauf der Leiste 9 folgendes Schneidmesser 25 auf, dem eine auf gleicher Höhe in der gegenüberliegenden Stempelleiste 9 angeordnete, entsprechend ausgerichtete Schneidnut 26 zugeordnet ist. In seiner Ausgangsstellung ist das Schneidmesser 25 in die Schneidmessernut 24 versenkt eingefahren; zum Abschneiden des Folienschlauches 18 wird es aus der Schneidmessernut 24 ausgefahren, bis es in die Schneidnut 26 eintaucht (Fig. 3d). Dabei wird der Folienschlauch 18 von dem zwischen den beiden Stempelleisten 9 eingeklemmten Bördelsteg der Fügenaht 17 abgetrennt. Vorzugsweise ist die Schneideinrichtung 23 im nutbodenseitigen Bereich der Stempelleisten 9 angeordnet, so daß nach dem Trennen ein relativ hoher Bördelsteg bzw. Fügesteg im Bereich der Fügenaht 17 verbleibt, der eine hohe oder noch ausreichende Zusammenhaltekraft gewährleistet.

Eine thermische Aktivierung der Fügebereiche 15 kann mittels einer Heizeinrichtung 30 erfolgen.

Eine Tiefziehvorrichtung gemäß den beiden Ausführungsformen oder auch eine abgewandelte Ausführungsform mit einer Schneideinrichtung, die im Bereich des Spaltes 7, z. B. an der Fülleiste 10 und/oder an den Stempelleisten 9 angeordnet sein kann, kann auch zum Vorfertigen von Formteilen aus einer Folie verwendet werden. Dies ist beispielsweise zweckmäßig, wenn aus einem bestimmten Folienmaterial eine bestimmte Anzahl von topographisch verformten Formteilen vorgefertigt werden soll, die zwischengelagert und später mit anderen Formteilen, beispielsweise aus einem anderen Folienmaterial, kombiniert und zusammengefügt werden sollen.

Bei der Vorfertigung der Formteile wird die Folie 1, die in der Regel keine vorläufige Fügenaht 1b aufweist, in die Tiefziehvorrichtung eingelegt, wobei mit der Heizeinrichtung zur Erwärmung der Folie 1 auf Verformungstemperatur die Folienfläche erwärmt wird. Die erwärmte Folie wird dann in der oben beschriebenen Art und Weise in der Tiefziehvorrichtung tiefgezogen. Da bei der Vorfertigung der Formteile kein Fügevorgang erfolgt, wird die in den Spalt 7 gezogene Falte 13 weder thermisch aktiviert noch mit Kleber bestrichen. Die tiefgezogene Folie 1 wird im Bereich der Falte 13 durch die Schneideinrichtung z.B. 20, 21 oder 23 in einzelne Formteile getrennt, die dann von den Konturteilen 6 abgenommen und zwischengelagert werden. Die Formteile weisen durch das erfindungsgemäße Tiefziehen in den Spalt 7 nach dem Schneiden einen Rand auf, der in einem späteren z.B. erfindungsgemäßen Fügeverfahren zum Fügen verwendet werden kann, wobei eine Schlauchbildung entfällt. Die Ränder der zu fügenden Formteile werden in dem getrennt auszuführenden Fügeverfahren an die Stempelflächen 9a einer Fügevorrichtung angelegt und wie oben beschrieben verpreßt.

Vorzugsweise wird für die Vorfertigung von Formteilen die im Bereich der Stempelfläche 9a angeordnete Schneideinrichtung 23 verwendet, so daß vorgegebene, gegebenenfalls sogar formstabile Randbereiche ausgebildet werden.

Wenn an dem Rand der Formteile ein größerer Folienüberstand belassen werden soll, um z. B. für eine Verankerung von Hinterschäummaterial vorzusehen, kann auch die an der nutseitigen Oberfläche 10a der Fülleiste 10 vorgesehene Schneideinrichtung verwendet werden.

Die vorgefertigten Formteile können später auf derselben Tiefziehvorrichtung zusammengefügt werden, wobei Formteile aus unterschiedlichem Folienmaterial miteinander kombiniert werden können. Das Vorfertigen und Fügen der Formteile kann aber auch an zwei unterschiedlichen Vorrichtungen, einer Tiefziehvorrichtung und einer Fügevorrichtung, ausgeführt werden, wobei beide Vorrichtungen Konturteile 6 mit gleicher Topographie bzw. mit gleichgeformten Konturoberflächen 6a aufweisen. Die Tiefziehvorrichtung braucht nur mit den für das Tiefziehverfahren notwendigen Einrichtungen versehen sein, wie z. B. der Heizeinrichtung zum Erwärmen der Folien 1 auf Verformungstemperatur und den entsprechenden Schneideinrichtungen, sowie einer Einrichtung zum Erzeugen des Saugvakuums, wobei die Konturteile 6 mit der Fülleiste 10 fest verbunden bzw. einteilig oder einstückig ausgebildet sein können. Die korrespondierende Fügevorrichtung braucht hingegen nur zwei Konturteile 6 ohne Fülleiste aufzuweisen, wobei eine Einrichtung zum thermischen Aktivieren der Fügebereiche 15 vorhanden ist. Der zwischen den Konturteilen 6 ausgebildete Spalt 7 kann verengt werden, um die Formteile unter Druck zu fügen. Eine solche Aufteilung des Herstellungsverfahrens in Tiefziehen und Fügen in verschiedenen Vorrichtungen bzw. in zwei separaten Vorrichtungen ist wirtschaftlich und zweckmäßig, wenn das Tiefziehen an einem Ort vorgenommen wird und das Fügen an anderer Stelle erfolgen soll oder muß.

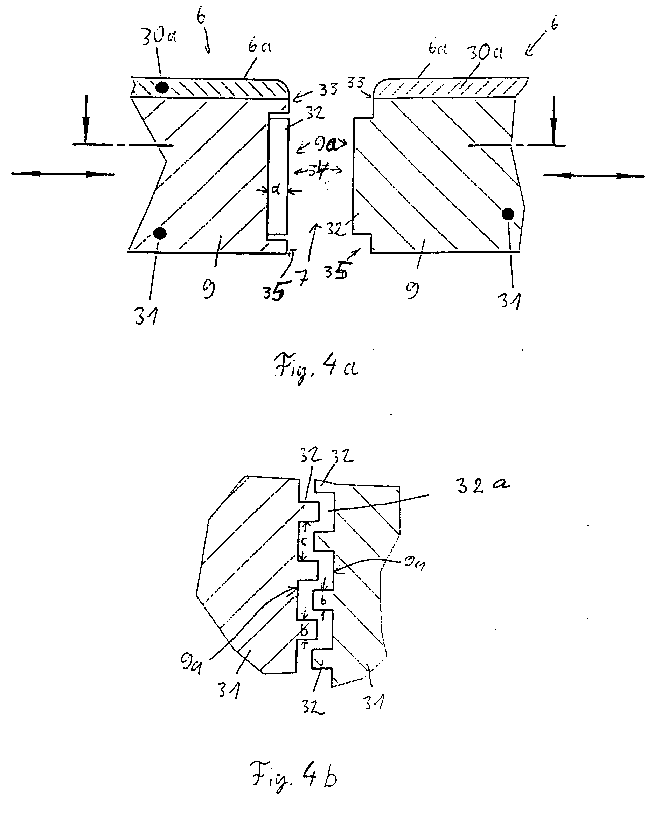

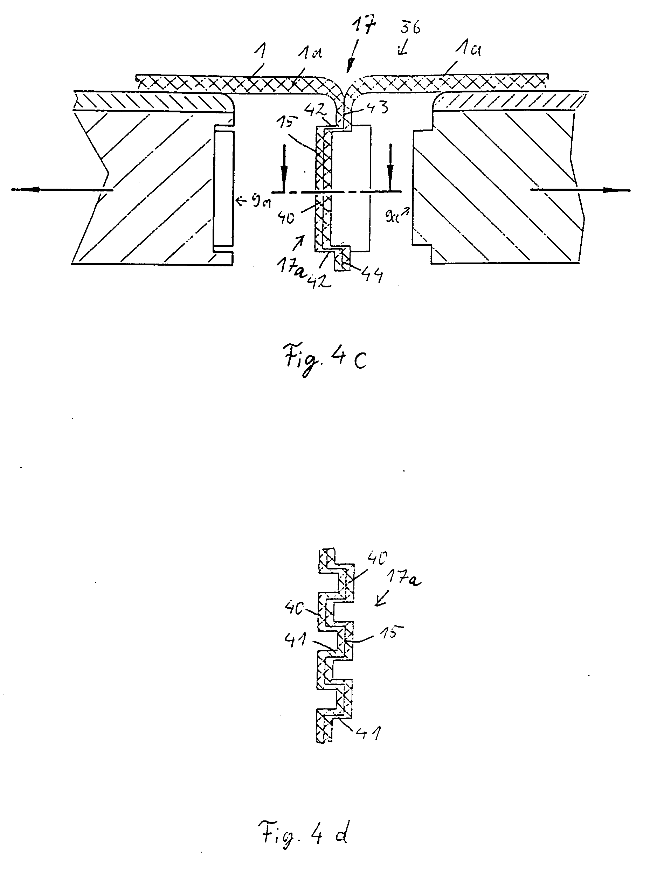

Die Ausführungsform der Stempelleisten 9, mit denen eine besonders festgefügte Fügenaht 15 erzeugt werden kann, ist in den Fig. 4a bis 4d dargestellt.

Die Konturteile 6 sind zweiteilig ausgebildet, mit einem Grundkörper 31 mit einer Auflageschicht 30a, die auf der Oberseite des Grundkörpers 3l angeordnet ist, die die Konturfläche 6a bildet. Die Auflageschicht 30a besteht aus einem Material, an dem die Kunststoffolie während des Tiefziehvorgangs nicht haftet, so daß das Formteil nach dem Tiefziehen einfach abgenommen werden kann. Die Stempelleiste 9 wird im wesentlichen durch den Grundkörper 31 dargestellt, wobei der Grundkörper 31 die Preß- bzw. Stempelfläche 9a bildet.

Die Preßfläche 9a ist in drei Bereiche unterteilt, einem schmalen oberen Fügenaht-Bereich 33, der an die Konturoberflächen 6a angrenzt, einen breiten mittigen Profil-Bereich 34, der profiliert ausgebildet ist, und einen schmalen unteren Fügenaht-Bereich 35. Die Preßflächen 9a sind in den schmalen oberen bzw. unteren Fügenaht-Bereichen 33, 35 jeweils ebenflächig ausgebildet.

In ihren mittigen Profil-Bereichen 34 sind die Preßflächen 9a im Querschnitt etwa zinnenartig ausgebildet (Fig. 4b), wobei vertikal verlaufende, im Querschnitt rechteckige Zahnleisten 32 von den Stempeloberflächen vorstehen. Die Zahnleisten bzw. Zahnstege 32 sind in gleichen Abständen zueinander angeordnet. Die Höhe a der Zahnstege 32 entspricht etwa der doppelten Materialstärke der zu fügenden Folie. Die Breite b der Zahnstege 32 ist geringer als die Breite einer Zahnlücke 32a bzw. als der Abstand c zwischen benachbarten Zahnstegen 32 einer Stempelleiste 9. Die Zahnstege 32 der einen Stempelleiste 9 sind zu den Zahnstegen 32 der anderen Stempelleiste 9 versetzt angeordnet, so daß beim Verengen des Spaltes 7 jeweils ein Zahnsteg 32 einer Stempelleiste 9 in die Zahnlücke 32a zwischen zwei benachbarten Zahnstegen 32 der anderen Stempelleiste 9 eintaucht, wobei die beim Fügen ineinander verzahnten Zahnstege 32 mit einem geringen Abstand zueinander angeordnet sind, der zweckmäßigerweise im Bereich von 0,9 bis zum 1,5fachen der Folienstärke liegt.

Hierdurch ergibt sich bei bis auf einen geringen Abstand zusammengefahrenen Stempelleisten 9 im mittigen Bereich 34 der Preßflächen 9a ein Zwischenraum in Form einer "Rechteckwelle" (Fig. 4b). Der Abstand zwischen den zusammengefahrenen Stempelleisten beträgt etwa das 1,1 bis 1,5fache der Folienstärke.

Diese Fügestempel 31 sind insbesondere für ein kleberloses Fügen zwischen Kunststoffolien 1 aus thermoplastischem Material geeignet, wie z. B. Kunststoffolien aus thermoplastischem Polyolefin (TPO).

Die Folie 1 bzw. die Folienteile 1a werden in der oben beschriebenen Art und Weise in das Formwerkzeug 5 eingebracht und an ihren an den Stempelflächen 9a anliegenden Bereichen thermisch aktiviert, bis die Folie 1 in diesen Bereichen plastifiziert ist. Die Folienteile 1a werden dann in der oben angegebenen Art und weise durch Verengen des Spaltes 7 verpreßt, wodurch sich ein Fügesteg 17a ergibt, die in ihrem oberen bzw. an dem auf den Konturoberflächen 6a aufliegenden Folienbereichen der Folie 1 angrenzenden Bereich einen präzisen Verlauf aufweist, wie er durch die Topographie an den Grenzen der Konturteile 6 vorgegeben ist, und in seinem mittigen Bereich ein im Querschnitt rechteckwellenförmiges Profil aufweist. Hierdurch wird erreicht, daß an der dem Fügesteg 17 gegenüberliegenden Dekorseite 36 der Folie 1 eine gleichförmig linienhaft, präzise verlaufende Fügenaht 17 erkennbar ist, wohingegen der Fügesteg 17a selbst eine profilierte und damit sehr feste Verbindung zwischen den Formteilen bildet.

Diese feste Verbindung wird durch die Wellenform im Fügebereich erzielt, da die Verbindungsfläche zwischen den beiden Fügeflächen 15 bzw. zwischen den Formteilen verlängert wird, so daß auch bei einer kleberlosen Fügung eine hochfeste Verbindung an der Fügenaht erzielt wird. Die beiden miteinander gefügten Folienteile werden durch die Wellenform sozusagen miteinander verzahnt, so daß die profilierte Fügenaht neben einer Quer- auch eine Normalkraft-Komponente im Fügebereich aufnehmen kann. Hierdurch wird ein Aufscheren der Verbindung verhindert.

Der derart profilierte Bereich des Fügestegs 17a weist in Längsrichtung der Fügenaht 17 ausgerichtete, seitlich nach außen versetzte vertikale Bereiche 40 auf, die jeweils mit quer zur Fügenaht 17 verlaufenden Verbindungsbereichen 41 verbunden sind.

Am oberen bzw. unteren Rand geht der profilierte Bereich 34 der Fügenaht mit in Längsrichtung der Fügenaht 17 ausgerichteten, horizontalen Übergangsbereichen 42 in obere und untere glatte, ebenflächige Bördelstege 43, 44 über.

Durch dieses sowohl im horizontalen als auch im vertikalen Querschnitt ausgebildete Profil kann die Fügenaht Kraft-Komponenten aus beliebigen Richtungen aufnehmen.

Statt eines Profils in Form einer "Rechteckwelle" kann die Stempelfläche 9a auch andere Erhebungen und Vertiefungen beispielsweise in Form einer Sinuswelle oder Stifte und Ausnehmungen oder dergleichen aufweisen.

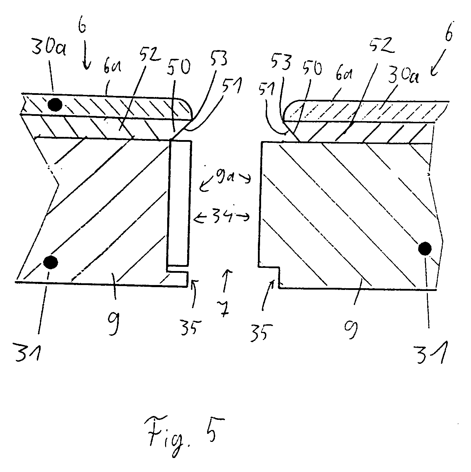

Beim Verpressen wird die Folie im Fügebereich vorzugsweise unter ihr Ausgangsvolumen verformt z. B. komprimiert, so daß Verpreßwülste oberhalb und unterhalb des Fügebereichs entstehen. Diese Verpreßwülste werden durch das Vorsehen von Dichtleisten 50 auf einer oder auf beiden Seiten des Zahnprofils des Fügestempels vermieden. Diese Dichtleisten 50 sehen einen hinterschnittenen Bereich 51 vor, der einen Freiraum für das aus dem Fügebereich gedrückte Material und eine obere, mit der Auflageschicht 30a bündig abschließende Kante 53 bildet, so daß ein Übertreten der Kunststoffmasse über die Fügenaht 17 verhindert wird. Die Dichtleiste 50 kann an einer Zwischenplatte 52 ausgebildet sein (Fig. 5), wobei es nicht notwendig ist, daß die Zwischenplatte 52 über ihre gesamte Höhe einen hinterschnittenen Bereich 51 aufweist. Die Dichtleiste 50 steht nicht über eine vertikale Verbindungslinie zwischen der Auflageschicht 30a und den Zahnstegen 32 vor, so daß die Dichtleiste 50 nicht den Fügesteg 17a zusätzlich verquetscht bzw. einschneidet. Der Verlauf der Fügenaht wird bei den Dichtleisten 50 durch die obere Kante 53 festgelegt.

Man hat festgestellt, daß die profilierte Fügung elastische Verformungen der Folien im Bereich der Fügenaht sehr gut ausgleichen kann, da Materialreserven im Fügebereich zur Verfügung stehen.

## Patentansprüche

1. Tiefgezogenes, eine vorbestimmte Topographie aufweisendes Formteil aus einer Kunststoffolie (1), insbesondere aus einem thermoplastischen Polyolefin, die aus zumindest zwei Folienteilen (1a) besteht, die jeweils an einer Fügefläche (15) zu einer Fügenaht (17) mit einem gebördelten Fügesteg (17a) gefügt sind, wobei die Fügenaht (17) in der Topographie des Formteils entlang einer vorgegebenen Linie verläuft,
**dadurch gekennzeichnet,**
daß der gebördelte Fügesteg (17a) einen verlängerten profilierten Bereich (40, 41, 42) aufweist.

2. Tiefgezogenes Formteil nach Anspruch 1,
**dadurch gekennzeichnet,**
daß der verlängerte profilierte Bereich (40, 41, 42) mit einem nicht profilierten, ebenflächigen Bördelsteg (43) in die die vorbestimmte Topographie aufweisenden Bereiche der Folie (1) übergeht.

3. Tiefgezogenes Formteil nach Anspruch 1 und/oder 2,
**dadurch gekennzeichnet,**
daß die beiden Folienteile (1a) an der Fügenaht (17) vernetzt bzw. verschweißt sind.

4. Tiefgezogenes Formteil nach einem oder mehreren der Ansprüche 1 bis 3,
**dadurch gekennzeichnet,**
daß an der gebördelten Fügenaht (17) ein Schlauch (18) ausgebildet ist, wobei im Bereich des Schlauchs (18) eine vorläufige Fügenaht (1b) verläuft.

5. Tiefgezogenes Formteil nach einem oder mehreren der Ansprüche 1 bis 4, **dadurch gekennzeichnet,**
daß der profilierte Bereich (40, 41, 42) des gebördelten Fügestegs (17a) wellenförmig oder insbesondere rechteckwellenförmig ausgebildet ist.

6. Tiefgezogenes Formteil nach einem oder mehreren der Ansprüche 1 bis 5, **dadurch gekennzeichnet,**
daß das Formteil auf der Seite des gebördelten Fügestegs (17a) zu einem voluminösen Körper hinterschäumt oder auf eine harte Unterlage mit und ohne Schaum dazwischen aufgebracht ist.

7. Tiefgezogenes, eine vorbestimmte Topographie aufweisendes Formteil aus einer Kunststoffolie (1) nach einem oder mehreren der Ansprüche 1 bis 6, wobei die zumindest zwei Folienteile (1a) mit einer vorläufigen Fügenaht (1b) verbunden sind, und das tiefgezogene Formteil durch folgende Verfahrensschritte herstellbar ist:
- Tiefziehen der Folie im Bereich der vorläufigen Fügenaht (1b) zu einer im Querschnitt etwa T-förmigen Falte (13), so daß die vorläufige Fügenaht (1b) im Bereich der Falte (13) verläuft, wobei die Falte (13) zwei sich gegenüberliegende Faltenwände (13b) aufweist,
- Erwärmen der Faltenwände (13b) an jeweils einer Fügefläche (15) der Faltenwände (13b) und
- Verbinden der beiden Faltenwände (13b) durch Verlängern und Verpressen der beiden Fügeflächen (15) der Faltenwände (13b) zu einer gebördelten Fügenaht (17).

8. Tiefziehverfahren zur Herstellung eines Formteils, insbesondere nach einem oder mehreren der Ansprüche 1 bis 7, aus mindestens zwei Folien, die in ein Formwerkzeug vorgeformt eingebracht oder eingebracht und auf Formtemperatur erwärmt und tiefgezogen werden, wobei die zwei Folien jeweils einen Rand aufweisen und die Ränder gegenüberliegende Fügebereiche bilden, oder
aus einer Folie, die aus wenigstens zwei Folienteilen mit einer dazwischen verlaufenden vorläufigen Fügenaht vorgefertigt ist und im Bereich der vorläufigen Fügenaht zu einer Falte tiefgezogen wird, und die Falte zwei sich gegenüberliegende Faltenwände und einen Faltenboden aufweist, wobei
die sich gegenüberliegenden Fügebereiche der Ränder bzw. der Falte auf Fügetemperatur erhitzt und die Fügebereiche zu einer gebördelten Fügenaht zusammengedrückt werden, **dadurch gekennzeichnet,**
daß beim Fügen die Fügebereiche durch Profilierung verlängert werden.

9. Tiefziehverfahren nach Anspruch 8,
**dadurch gekennzeichnet,**
daß die Verlängerung durch Vorsprünge und Vertiefungen erzeugt wird.

10. Tiefziehverfahren nach Anspruch 8 oder 9,
**dadurch gekennzeichnet,**
daß die Fügebereiche wellenförmig verlängert werden.

11. Tiefziehverfahren nach einem oder mehreren der Ansprüche 8 bis 10, **dadurch gekennzeichnet,**
daß ein Folienüberstand an der gebördelten Fügenaht abgeschnitten wird.

12. Tiefziehvorrichtung zur Herstellung eines Formteils nach einem oder mehreren der Ansprüche 1 bis 7 aus einer Folie (1) mit einem Formwerkzeug (5), das entsprechend der auszubildenden Form des Formteils konturiert ist und mit einer Heizeinrichtung versehen ist, um die Folie (1) vor dem Tiefziehvorgang auf Formtemperatur zu erhitzen, wobei das Formwerkzeug (5) zumindest zwei Konturflächen (6a) aufweist, zwischen denen ein Spalt (7) ausgebildet ist, in den ein Bereich der Folie (1) durch Unterdruck hineingezogen werden kann, und daß der Spalt (7) durch Spaltwände (8) zweier Konturteile (6) begrenzt ist, wobei die Konturteile (6) zum Verengen des Spaltes (7) aufeinander zu verschiebbar sind, und die Spaltwände (8) in ihrem oberen Bereich jeweils eine in Längsrichtung des Spalts (7) verlaufende und in den Spalt (7) vorstehende Stempelleiste (9) aufweisen, wobei die Stempelleisten (9) sich gegenüberliegende Stempelflächen (9a) bilden, die profiliert sind.

13. Tiefziehvorrichtung nach Anspruch 12,
wobei
die Stempelflächen (9a) wellenförmig profiliert sind.

14. Tiefziehvorrichtung nach Anspruch 12 oder Anspruch 13,
wobei
die Stempelleisten (9) in Längsrichtung jeweils einen wellenförmig profilierten Bereich (35) an den Stempelflächen (9a) aufweisen, wobei sich die Profile der Stempelflächen (9a) in etwa gegenseitig ergänzen, so daß sie beim Verengen des Spaltes (7) ineinandergreifen.

15. Tiefziehvorrichtung nach Anspruch 14,
wobei
die Stempelleisten (9) angrenzend an den Konturflächen (6a) einen schmalen ebenflächigen Bereich (33) bilden.

16. Tiefziehvorrichtung nach Anspruch 14 oder 15,
wobei
an der Stempelleiste (9) oder oberhalb der Stempelleiste (9) angrenzend an den Konturflächen (6a) eine Dichtleiste (50) vorgesehen ist, die einen Freiraum bildet für aus dem Fügebereich gedrücktes Material.

17. Tiefziehvorrichtung nach einem oder mehreren der Ansprüche 14 bis 16, wobei
die Stempelflächen (9a) rechteckwellenförmig profiliert sind, das Profil durch vorstehende Zähne (32) gebildet wird und die Zähne (32) einer Stempelleiste (9) zu den Zähnen (32) der anderen Stempelleiste (9) versetzt angeordnet sind, so daß beim Verengen des Spaltes (7) jeweils ein Zahn (32) einer Stempelleiste (9) in den Raum zwischen zwei benachbarten Zähnen (32) der anderen Stempelleiste (9) einen Zwischenraum bildend eingreift.

18. Tiefziehvorrichtung nach einem oder mehreren der Ansprüche 12 bis 17, mit
einer Heizeinrichtung zum Erwärmen der Folie auf Fügetemperatur im Bereich des Spaltes (7).

19. Tiefziehvorrichtung nach Anspruch 18,
wobei
die Heizeinrichtung ein Heißluftgebläse aufweist.

20. Tiefziehvorrichtung nach Anspruch 18 oder 19,
wobei
die Heizeinrichtung ein Heizschwert aufweist, das in den Spalt (7) zum Erwärmen der Folie abgesenkt werden kann.

21. Tiefziehvorrichtung nach einem oder mehreren der Ansprüche 18 bis 20, wobei
die Heizeinrichtung eine Hochfrequenz- oder Ultraschallquelle aufweist.

22. Tiefziehvorrichtung nach einem oder mehreren der Ansprüche 12 bis 21, wobei
die Konturflächen (6a) jeweils auf einem Konturteil (6) ausgebildet sind, die zwischen sich den Spalt (7) begrenzen und aufeinander zu verschiebbar sind, so daß sie nach dem Hineinziehen der Folie (1) in den Spalt (7) zur Verengung des Spaltes zusammengefahren werden können, und daß eine Fülleiste (10) zwischen den beiden Konturteilen (6) angeordnet ist, die vertikal bewegbar zwischen einer oberen und unteren Stellung angeordnet ist und in der oberen Stellung ein Zusammenschieben der Konturteile (6) verhindert und den Spalt (7) zu einer nach oben hin offenen Nut abschließt.

23. Tiefziehvorrichtung nach einem oder mehreren der Ansprüche 12 bis 22, wobei
eine Schneideinrichtung zum Schneiden im Bereich des Spaltes (7) vorgesehen ist.

24. Tiefziehvorrichtung nach Anspruch 23,
wobei
die Schneideinrichtung ein Schneidmesser (21; 25) und eine Schneidenut (20; 26) aufweist.

25. Tiefziehvorrichtung nach Anspruch 24,
wobei
die Schneidenut (20) in der Fülleiste (10) angeordnet ist.

26. Tiefziehvorrichtung nach Anspruch 12 und Anspruch 24 oder Anspruch 12, Anspruch 29 und einem oder mehreren der Ansprüche 13 bis 22,
wobei
das Schneidmesser (25) ausfahrbar in einer Lagernut (24) in einer der Stempelleisten (9) lagert, wobei die Schneidenut (26) an der gegenüberliegenden Stempelleiste (9) angeordnet ist und zu der Lagernut (24) gegenüberliegend ausgebildet ist.

## Claims

1. Deep-drawn moulding having a predetermined topography and made from a plastic sheet (1), in particular from a thermoplastic polyolefin, the said sheet consisting of at least two sheet parts (1a) which are respectively joined at a joining face (15) to form a weld (17) having a flanged joining web (17a), the weld (17) extending along a predefined line in the topography of the moulding, characterized in that the flanged joining web (17a) has a lengthened profiled region (40, 41, 42).

2. Deep-drawn moulding according to Claim 1, characterized in that the lengthened profiled region (40, 41, 42) merges, by way of a non-profiled, flat-surfaced flanged web (43), into the regions of the sheet (1) that have the predetermined topography.

3. Deep-drawn moulding according to Claim 1 and/or 2, characterized in that the two sheet parts (1a) are linked or welded at the weld (17).

4. Deep-drawn moulding according to one or more of Claims 1 to 3, characterized in that a tube (18) is formed at the flanged weld (17), a temporary weld (1b) extending in the region of the tube (18).

5. Deep-drawn moulding according to one or more of Claims 1 to 4, characterized in that the profiled region (40, 41, 42) of the flanged joining web (17a) is designed to be wave-shaped or in particular square-wave shaped.

6. Deep-drawn moulding according to one or more of Claims 1 to 5, characterized in that, on the side of the flanged joining web (17a), the moulding is backed with foam to form a voluminous body or is applied to a hard substrate, with and without foam in between.

7. Deep-drawn moulding having a predetermined topography and made from a plastic sheet (1) according to one or more of Claims 1 to 6, the at least two sheet parts (1a) being connected by way of a temporary weld (1b) and it being possible for the deep-drawn moulding to be produced by the following process steps:
- deep-drawing the sheet in the region of the temporary weld (1b) to form a crease (13) of approximately T-shaped cross-section, so that the temporary weld (1b) extends in the region of the crease (13), the crease (13) having two opposite crease walls (13b),
- heating the crease walls (13b) at a joining face (15) of the crease walls (13b) in each case, and
- connecting the two crease walls (13b) by lengthening and pressing the two joining faces (15) of the crease walls (13b) to form a flanged weld (17).

8. Deep-drawing process for producing a moulding, in particular according to one or more of Claims 1 to 7, from at least two sheets, which are introduced in premoulded form into a mould or are introduced, heated to moulding temperature and deep-drawn, the two sheets each having an edge and the edges forming opposite joining regions, or
from one sheet, which is prefabricated from at least two sheet parts with a temporary weld extending between them, and, in the region of the temporary weld, is deep-drawn to farm a crease, and the crease has two opposite crease walls and a crease bottom,
the opposite joining regions of the edges or of the crease being heated to joining temperature and the joining regions being pressed together to form a flanged weld,
characterized in that, when being joined, the joining regions are lengthened by profiling.

9. Deep-drawing process according to Claim 8, characterized in that the lengthening is produced by projections and depressions.

10. Deep-drawing process according to Claim 8 or 9, characterized in that the joining regions are lengthened in a wave shape.

11. Deep-drawing process according to one or more of Claims 8 to 10, characterized in that any sheet projection at the flanged weld is cut off.

12. Deep-drawing apparatus for producing a moulding according to one or more of Claims 1 to 7 from a sheet (1), having a mould (5) which is contoured to correspond to the shape of the moulding to be formed and is provided with a heating device in order to heat the sheet (1) to moulding temperature before the deep-drawing operation, the mould (5) having at least two contoured faces (6a) between which there is formed a gap (7) into which a region of the sheet (1) can be drawn by vacuum, and in that the gap (7) is bounded by gap walls (8) of two contoured parts (6), the contoured parts (6) being displaceable towards each other to narrow the gap (7), and the gap walls (8) each having in their upper region a punch bar (9) that extends in the longitudinal direction of the gap (7) and projects into the gap (7), the punch bars (9) forming opposite punch faces (9a), which are profiled.

13. Deep-drawing apparatus according to Claim 12, the punch faces (9a) being profiled in a wave shape.

14. Deep-drawing apparatus according to Claim 12 or Claim 13, the punch bars (9) each having, in the longitudinal direction, a wave-shaped profiled region (35) on the punch faces (9a), the profiles of the punch faces (9a) approximately mutually complementing each other, so that they engage in one another when the gap (7) is narrowed.

15. Deep-drawing apparatus according to Claim 14, the punch bars (9) forming a narrow, flat-surface region (33) adjacent to the contoured faces (6a).

16. Deep-drawing apparatus according to Claim 14 or 15, provision being made, on the punch bar (9) or above the punch bar (9), adjacent to the contoured faces (6a), of a sealing strip (50) which forms a clearance for material pressed out of the joining area.

17. Deep-drawing apparatus according to one or more of Claims 14 to 16, the punch faces (9a) having a square-wave profile, the profile being formed by projecting teeth (32) and the teeth (32) of one punch bar (9) being arranged so that they are offset with respect to the teeth (32) of the other punch bar (9), so that when the gap (7) is narrowed, in each case a tooth (32) of one punch bar (9) engages in the space between two adjacent teeth (32) of the other punch bar (9), forming an interspace.

18. Deep-drawing apparatus according to one or more of Claims 12 to 17, having a heating device for heating the sheet to joining temperature in the region of the gap (7).

19. Deep-drawing apparatus according to Claim 18, the heating device having a hot-air blower.

20. Deep-drawing apparatus according to Claim 18 or 19, the heating device having a heating tongue which can be lowered into the gap (7) in order to heat the sheet.

21. Deep-drawing apparatus according to one or more of Claims 18 to 20, the heating device having a high-frequency or ultrasonic source.

22. Deep-drawing apparatus according to one or more of Claims 12 to 21, the contoured faces (6a) each being formed on a contoured part (6), bounding the gap (7) between them and being displaceable towards each other so that, after the sheet (1) has been drawn into the gap (7), they can be moved together to narrow the gap, and a filler strip (10) being arranged between the two contoured parts (6), being arranged so as to be movable vertically between an upper and a lower position and, in the upper position, preventing the contoured parts (6) from being pushed together and sealing off the gap (7) with respect to a groove that is open towards the top.

23. Deep-drawing apparatus according to one or more of Claims 12 to 22, a cutting device being provided for cutting in the region of the gap (7).

24. Deep-drawing apparatus according to Claim 23, the cutting device having a cutter (21; 25) and a cutting groove (20; 26).

25. Deep-drawing apparatus according to Claim 24, the cutting groove (20) being arranged in the filler strip (10).

26. Deep-drawing apparatus according to Claim 12 and Claim 24 or Claim 12, Claim 29 and one or more of Claims 13 to 22, the cutter (25) being mounted in a bearing groove (24) in one of the punch bars (9) such that it can be moved out, the cutting groove (26) being arranged on the opposite punch bar (9) and being designed to be opposite the bearing groove (24).

## Revendications

1. Article embouti présentant une topographie prédéterminée, l'article étant réalisé à partir d'une feuille de matière plastique (1), en particulier à partir d'une polyolefine thermoplastique, qui est constituée d'au moins deux morceaux de feuille (1a) qui sont assemblés respectivement au niveau d'une surface de jonction (15) pour former un assemblage de jonction (17) avec une bride de jonction repliée (17a) l,assemblage de jonction (17) s'étendant dans la topographie de l'article le long d'une ligne prédéterminée, caractérisé en ce que la bride de jonction repliée (17a) comprend une zone profilée allongée (40, 41, 42).

2. Article embouti selon la revendication 1, caractérisé en ce que la zone profilée allongée (40, 41, 42) se prolonge avec une bride repliée plane non profilée (43) dans la zone de la feuille (1) présentant la topographie prédéterminée.

3. Article embouti selon la revendication 1 et/ou la revendication 2, caractérisé en ce que les deux morceaux de feuille (1a) sont réticulés, respectivement soudés, au niveau de l'assemblage de jonction (17).

4. Article embouti selon l'une ou plusieurs des revendications 1 à 3, caractérisé en ce qu'un tuyau (18) est réalisé au niveau de l'assemblage de jonction replié (17), un assemblage de jonction préalable (1b) s'étendant dans la zone du tuyau (18).

5. Article embouti selon l'une ou plusieurs des revendications 1 à 4, caractérisé en ce que la zone profilée (40, 41, 42) de la bride de jonction repliée (17a) est réalisée en forme d'onde ou en particulier en forme d'onde rectangulaire.

6. Article embouti selon l'une ou plusieurs des revendications 1 à 5, caractérisé en ce que l'article mousse sur le côté de la bride de jonction repliée (17a) pour former un corps volumineux ou est appliqué sur un support dur avec ou sans interposition de mousse.

7. Article embouti présentant une topographie prédéterminée, ledit article étant réalisé à partir d'une feuille de matière plastique (1) selon l'une ou plusieurs des revendications 1 à 6, lesdits au moins deux morceaux de feuille (1a) étant reliés avec un assemblage de jonction préalable (1b), l'article embouti étant fabriqué avec les étapes de procédés suivantes :
- emboutir la feuille dans la zone de l'assemblage de jonction préalable (1b) pour former une fente (13) environ en forme de T en section transversale de sorte que l'assemblage de jonction préalable (1b) s'étend dans la zone de la fente (13) la fente (13) comprenant deux parois de fente opposés (13b),
- chauffer les parois de fentes (13b) au niveau d'une surface de jonction (15) respective des parois de fente (13b), et
- joindre les deux parois de fente (13b) par élongation et pressage des deux surfaces de jonction (15) des parois de fente (13b) pour former un assemblage de jonction replié (17).

8. Procédé d'emboutissage pour la fabrication d'un article, en particulier selon l'une ou plusieurs des revendications 1 à 7, à partir d'au moins deux feuilles qui sont mises en place de manière préformée ou mises en place et chauffées à une température de formage, et embouties dans un outil de formage, les deux feuilles présentant respectivement un bord et les bords formant des zones de jonction opposées, ou
à partir d'une feuille, qui est préfabriquée à partir d'au moins deux morceaux de feuille avec un assemblage de jonction préalable s'étendant entre eux et qui est emboutie dans la zone de l'assemblage de jonction préalable pour former une fente, et la fente présente deux parois de fente opposées et un fond de fente,
les zones de jonction opposées des bords respectivement de la fente étant chauffées à une température de jonction et les zones de jonction sont pressées ensemble pour former un assemblage de jonction replié,
caractérisé en ce que lors de l'assemblage, les zones de jonction sont allongées par profilage.

9. Procédé d'emboutissage selon la revendication 8, caractérisé en ce que l'allongement est réalisé par des projections et des évidements.

10. Procédé d'emboutissage selon la revendication 8 ou 9, caractérisé en ce que les zones de jonction sont prolongées en forme d'ondulation.

11. Procédé d'emboutissage selon l'une ou plusieurs des revendications 8 à 10, caractérisé en ce que l'excès de feuille est coupé au niveau de l'assemblage de jonction replié.

12. Dispositif d'emboutissage pour la fabrication d'un article selon l'une ou plusieurs des revendications 1 à 7, à partir d'une feuille (1) avec un outil de formage (5), qui à une forme correspondant à la forme de l'article à réaliser et est pourvu d'un dispositif de chauffage pour chauffer la feuille (1) à une température de formage avant l'étape d'emboutissage, l'outil de formage (5) présentant au moins deux surfaces de profil (6a) entre lesquelles est formée une fente (7), dans laquelle une zone de la feuille (1) peut être aspirée par dépression, et la fente (7) est délimitée par des parois de fente (8) de deux parties de profil (6), les parties de profit (6) pouvant être déplacées l'une vers l'autre pour rendre la fente (7) plus étroite, et les parois de fente (8) dans leurs zones supérieures comportant respectivement une nervure de poinçon (9) s'étendant respectivement dans la direction longitudinale de la fente (7) et faisant saillie dans la fente (7), les nervures de poinçon (9) formant des surfaces de poinçon opposées (9a) qui sont profilées.

13. Dispositif d'emboutissage selon la revendication 12, dans lequel les surfaces de poinçon (9a) sont profilées en forme d'ondulation.

14. Dispositif d'emboutissage selon la revendication 12 ou la revendication 13, dans lequel les nervures de poinçon (9) présentent dans la direction longitudinale respectivement une zone profilée en forme d'ondulation (35) au niveau des surfaces de poinçon (9a), les profils des surfaces de poinçon (9a) se complétant environ mutuellement de telle sorte qu'ils s'imbriquent lors du rétrécissement de la fente (7).

15. Dispositif d'emboutissage selon la revendication 14, dans lequel les nervures de poinçon (9) voisines des surfaces de profil (6a) forment une zone étroite plane.

16. Dispositif d'emboutissage selon la revendication 14 ou 15, dans lequel une nervure d'étanchéité (50) est prévue au niveau de la nervure de poinçon (9) ou au-dessus de la nervure de poinçon (9) voisine des surfaces de profil (6a), qui forme un espace libre pour du matériau pressé hors de la zone de jonction.

17. Dispositif d'emboutissage selon l'une ou plusieurs des revendications 14 à 16, dans lequel les surfaces de poinçon (9a) sont profilées en forme d'onde rectangulaire, le profil étant réalisé par des dents saillantes (32) et les dents (32) d'une nervure de poinçon (9) étant décalées par rapport aux dents (32) de l'autre nervure de poinçon (9), de telle sorte que lors du rétrécissement de la fente (7) respectivement une dent (32) d'une nervure de poinçon (9) s'imbrique dans l'espace entre deux dents voisines (32) de l'autre nervure poinçon (9) en formant un espace intermédiaire.

18. Dispositif d'emboutissage selon l'une ou plusieurs des revendications 12 à 17, comportant un dispositif de chauffage pour chauffer la feuille à une température de jonction dans la zone de la fente (7).

19. Dispositif d'emboutissage selon la revendication 18, dans lequel le dispositif de chauffage comprend une soufflante d'air chaud.

20. Dispositif d'emboutissage selon la revendication 18 ou 19, dans lequel le dispositif de chauffage présente une lame chauffante, qui peut être abaissée dans la fente (7) pour chauffer la feuille.

21. Dispositif d'emboutissage selon l'une ou plusieurs des revendications 18 à 20, dans lequel le dispositif de chauffage comprend une source de haute fréquence ou d'ultrasons.

22. Dispositif d'emboutissage selon l'une ou plusieurs des revendications 12 à 21, dans lequel les surfaces de profil (6a) sont réalisées respectivement sur une partie de profil (6) qui délimitent entre elles la fente (7) et qui sont déplaçables l'une vers l'autre de telle sorte qu'elles peuvent être mises en contact l'une de l'autre après l'aspiration de la feuille (1) dans la fente (7) pour rétrécir la fente, et dans lequel une nervure de remplissage (10) est disposée entre les deux parties de profil (6), qui est disposée de manière déplaçable verticalement entre une position supérieure et une position inférieure et qui empêche dans la position supérieure un déplacement des parties de profil (6) l'une vers l'autre et qui ferme la fente pour former une rainure ouverte vers le haut.

23. Dispositif d'emboutissage selon l'une ou plusieurs des revendications 12 à 22, dans lequel un dispositif de coupage est prévu pour couper dans la zone de la fente (7).

24. Dispositif d'emboutissage selon la revendication 23, dans lequel le dispositif de coupage comporte un couteau de coupe (21 ; 25) et une rainure de coupe (20 ; 26).

25. Dispositif d'emboutissage selon la revendication 24, dans lequel la rainure de coupe (20) est disposée dans la nervure de remplissage (10).

26. Dispositif d'emboutissage selon la revendication 12 et la revendication 24 ou la revendication 12, la revendication 24, et une ou plusieurs des revendications 13 à 22, dans lequel le couteau de coupe (25) est monté de manière amovible dans une rainure de montage (24) dans une des nervures de poinçon (9), la rainure de coupe (26) étant disposée dans la nervure de poinçon opposée (9) et est réalisée de manière opposée par rapport à la nervure de montage (24).
